# EUROPÄISCHE PATENTSCHRIFT

(11) **EP 0 988 476 B1**
(45) Veröffentlichungstag und Bekanntmachung des Hinweises auf die Patenterteilung: **18.09.2002**
(21) Anmeldenummer: 98937477.2
(22) Anmeldetag: 12.06.1998
(51) Int. Cl.: F16H 61/06

(54) **VERFAHREN ZUR VERMINDERUNG DES SCHALTRUCKS BEIM GANGAUSLEGEN**
METHOD FOR REDUCING JERKING DURING GEAR SHIFTING
PROCEDE POUR REDUIRE LES A-COUPS LORS DU CHANGEMENT DE RAPPORTS

(30) Priorität: 17.06.1997 DE 19725513
(43) Veröffentlichungstag der Anmeldung: 29.03.2000
(73) Patentinhaber: ZF FRIEDRICHSHAFEN Aktiengesellschaft, 88038 Friedrichshafen (DE)
(72) Erfinder: HABECK, Dirk, D-88069 Tettnang (DE)
(86) Internationale Anmeldenummer: EP9803551
(87) Internationale Veröffentlichungsnummer: WO98058196

(56) Entgegenhaltungen:
- EP-A1- 0 783 079
- DE-C1- 1 972 295
- US-A- 5 558 597
- US-A- 5 609 068

## Beschreibung

Die Erfindung betrifft ein Verfahren zur Verminderung des Schaltrucks beim Gangauslegen eines von einer Brennkraftmaschine angetriebenen Automatgetriebes nach dem Oberbegriff des ersten Anspruchs.

Aus der "Funktionsbeschreibung Automatikgetriebe, 5 HP 19 FL" der ZF Getriebe GmbH Saarbrücken, Ausgabe August 95, Seite 29, ist ein Automatgetriebe mit einem Wählhebel bekannt, wobei dieser eine Vorwärts- (D) und Rückwärtsfahrposition (R) sowie eine Park- (P) und Neutralstellung (N) aufweist. In den Positionen R, N und D (erster Gang) ist hierbei eine erste Kupplung geschlossen. Mit Verlassen der Position D und Übergang nach N öffnet eine zweite Kupplung bzw. mit Verlassen der Position R und Übergang nach N öffnet eine dritte Kupplung. In der Praxis kann nun bei einem derartigen Automatgetriebe folgendes Problem auftreten: Beim Gangauslegen, d. h. beim Übergang aus der Position D nach N bzw. von R nach N, wird die zweite bzw. dritte Kupplung geöffnet. Die Schaltqualität beim Gangauslegen wird dadurch bestimmt, auf welche Weise es gelingt, den Momentenabbau sanft zu vollziehen. Dafür ist zum einen eine fahrzeugseitige Auslegung und zum anderen die Zeit für den Druckabbau der abschaltenden Kupplung bestimmend. Der Forderung nach einer guten Schaltqualität steht jedoch die Forderung nach entsprechenden Sicherheits- und Haltbarkeitskriterien entgegen. Diese bestimmen, daß die abschaltende Kupplung unter allen Bedingungen, z. B. bei tiefen Temperaturen, sicher entleert werden muß. Ist dies nicht gewährleistet, so könnte bei sich öffnender Kupplung und gleichzeitiger Betätigung des Fahrpedals dies zu einer Zerstörung der Kupplung führen. Da die Sicherheits- und Haltbarkeitskriterien über den Komfortansprüchen einzustufen sind, wurden bisher beim Gangauslegen auftretende Schaltrucks akzeptiert.

Die der Erfindung zugrunde liegende Aufgabe besteht nun darin, für das zuvor beschriebene Automatgetriebe ein Verfahren bereitzustellen, das beide Forderungen, nämlich Komfort und Sicherheit, erfüllt.

Die erfindungsgemäße Lösung besteht darin, daß bei Erkennen einer Gangauslege-Bedingung das Druckniveau der ersten Kupplung von einem ersten auf ein zweites Druckniveau verringert wird, wobei das zweite Druckniveau oberhalb der Rutschgrenze liegt, so daß die erste Kupplung geschlossen bleibt.

In einer Ausgestaltung hierzu wird vorgeschlagen, daß mit Erkennen der Position N und sich öffnender zweiter bzw. dritter Kuppung die erste Kupplung für eine vorgebbare Zeit geöffnet wird. Nach Ablauf der Zeitstufe wird sodann das Druckniveau der ersten Kupplung über eine Rampenfunktion auf das zweite Druckniveau wieder erhöht, so daß diese wieder schließt.

Ein erster Vorteil der erfindungsgemäßen Lösung und deren Ausgestaltung besteht darin, daß das Getriebeeingangsmoment aufgrund des flachen Druckgradienten der abschaltenden ersten Kupplung sanft abgebaut wird, bevor die regulär abschaltende zweite bzw. dritte Kupplung, aus einem hohen Druckniveau kommend, entleert wird. Ein zweiter Vorteil besteht darin, daß diese Funktion lediglich durch eine Software-Änderung realisierbar ist. Veränderungen an der Hydraulik bzw. der Getriebe-Hardware sind somit nicht erforderlich.

In einer Ausgestaltung der Erfindung wird vorgeschlagen, daß die Gangauslege-Bedingung dann erkannt wird, wenn: die Temperatur des Hydraulikfluids größer einem Grenzwert und die Getriebeausgangsdrehzahl und ein vom Fahrer vorgebbarer Leistungswunsch und Motordrehzahl jeweils kleiner einem Grenzwert sind. Diese Ausgestaltung bietet den Vorteil, daß den unterschiedlichen Rahmenbedingungen entprechend Rechnung getragen wird.

In den Figuren ist ein vorbezugtes Ausführungsbeispiel dargestellt.

Es zeigen:
- Fig. 1: ein System-Schaubild;
- Fig. 2: eine Tabelle der Kupplungslogik und
- Fig. 3: ein Zeitdiagramm.

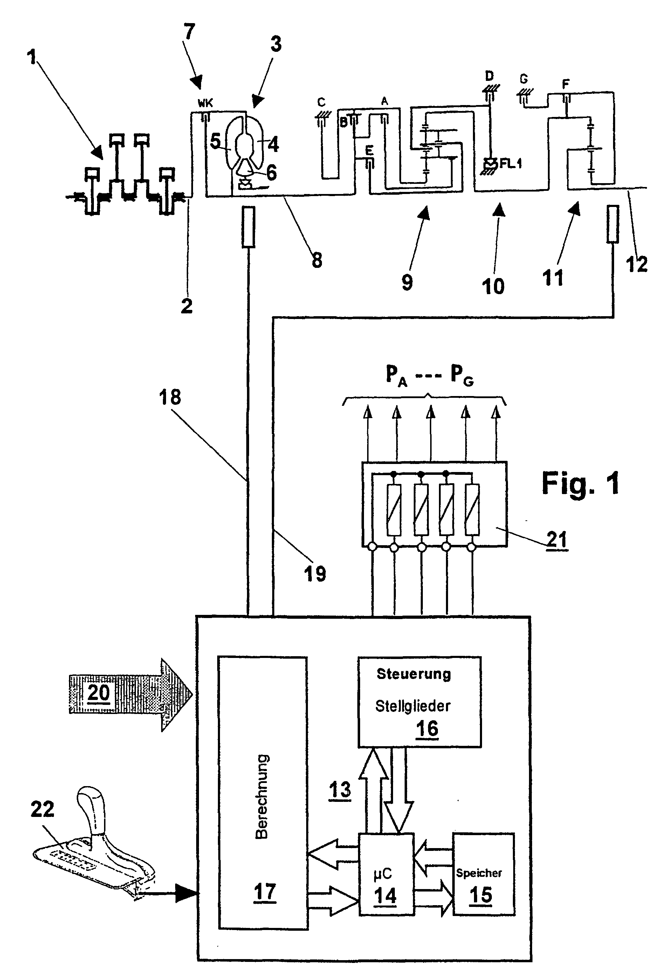

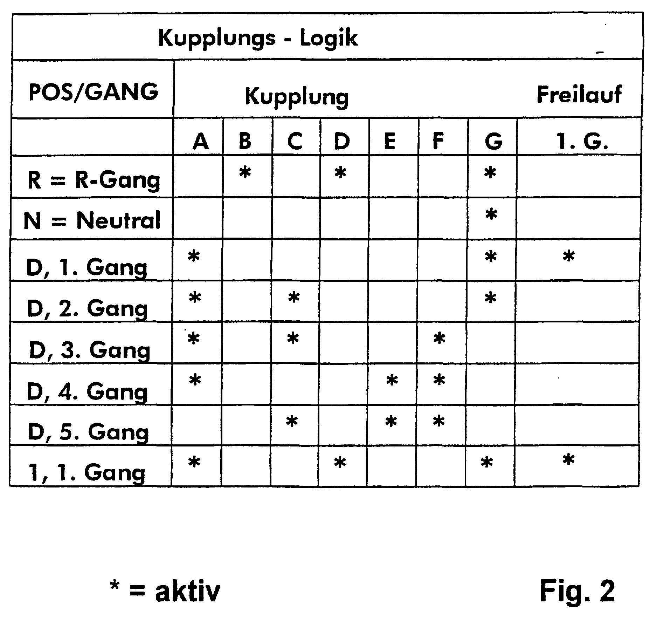

Fig. 1 zeigt ein System-Schaubild eines Automatgetriebes. Dieses besteht aus dem eigentlichen mechanischen Teil, einem hydrodynamischen Wandler 3, einem hydraulischen Steuergerät 21 und einer elektronischen Getriebesteuerung 13. Angetrieben wird das Automatgetriebe von einer Antriebseinheit 1, vorzugsweise Brennkraftmaschine, über eine Antriebswelle 2. Dieses ist mit dem Pumpenrad 4 des hydrodynamischen Wandlers 3 drehfest verbunden. Bekanntermaßen besteht der hydrodynamische Wandler 3 aus einem Pumpenrad 4, einem Turbinenrad 5 und einem Leitrad 6. Parallel zum hydrodynamischen Wandler 3 ist eine Wandlerkupplung 7 angeordnet. Die Wandlerkupplung 7 und das Turbinenrad 5 führen auf eine Turbinenwelle 8. Bei betätigter Wandlerkupplung 7 hat die Turbinenwelle 8 die gleiche Drehzahl wie die Antriebswelle 2. Der mechanische Teil des Automatgetriebes besteht aus Kupplungen und Bremsen A bis G, einem Freilauf 10 (FL1), einem Ravigneaux-Satz 9 und einem nachgeordneten Planetenradsatz 11. Der Abtrieb geschieht über eine Getriebeausgangswelle 12. Diese führt auf ein nicht dargestelltes Differential, welches über zwei Achshalbwellen die Antriebsräder eines nicht dargestellten Fahrzeuges antreiben. Über eine entsprechende Kupplungs-/Brems-Kombination wird eine Gangstufe festgelegt. Die Zuordnung der Kupplungslogik zur Gangstufe ist aus der Fig. 2 ersichtlich. Die Kupplung G, in Fig. 1 ist diese als Lamellenbremse dargestellt, ist demnach in den Positionen R, N und D (erster Gang) geschlossen. Diese Kupplung wird nachfolgend als erste Kupplung bezeichnet. In der Position D (erster Gang) ist die Kupplung A geschlossen. Nachfolgend wird diese als die zweite Kupplung bezeichnet. In der Position R ist z. B. die Kupplung D, hier wieder als Lamellenbremse ausgeführt, geschlossen. Diese wird nachfolgend als dritte Kupplung bezeichnet. Da der mechanische Teil für das weitere Verständnis der Erfindung nicht relevant ist, wird auf eine detaillierte Beschreibung verzichtet.

Die elektronische Getriebesteuerung 13 wählt in Abhängigkeit der Eingangsgrößen 18 bis 20 und 22 eine entprechende Fahrstufe aus. Über das hydraulische Steuergerät 21, in dem sich elektro-magnetische Stellglieder befinden, aktiviert sodann die elektronische Getriebesteuerung 13 eine entsprechende Kupplungs-/Brems-Kombination. Während der Schaltübergänge bestimmt die elektronische Getriebesteuerung 13 den Druckverlauf der an der Schaltung beteiligten Kupplungen/Bremsen. Von der elektronischen Getriebesteuerung 13 sind in stark vereinfachter Form als Blöcke dargestellt: Micro-Controller 14, Speicher 15, Funktionsblock Steuerung Stellglieder 16 und Funktionsblock Berechnung 17. Im Speicher 15 sind die getrieberelevanten Daten abgelegt. Getrieberelevante Daten sind z. B. Programme und fahrzeugspezifische Kennwerte als auch Diagnosedaten. Üblicherweise ist der Speicher 15 als EPROM, EEPROM oder als gepufferter RAM ausgeführt. Im Funktionsblock Berechnung 17 werden die für einen Schaltungsverlauf relevanten Daten berechnet. Der Funktionsblock Steuerung Stellglieder 16 dient der Ansteuerung der sich im hydraulischen Steuergerät 21 befindenden Stellglieder.
Die elektronische Getriebesteuerung 13 erhält Eingangsgrößen 20. Eingangsgrößen 20 sind z. B. eine den Leistungswunsch des Fahrers repräsentierende Größe, wie etwa die Fahrpedal-/Drosselklappenstellung, das Signal des von der Brennkraftmaschine abgegebenen Moments, die Drehzahl bzw. Temperatur der Brennkraftmaschine usw. Üblicherweise werden die Brennkraftmaschinen-spezifischen Daten von einem Motorsteuergerät bereitgestellt. Dieses ist in Fig. 1 nicht dargestellt. Als weitere Eingangsgrößen erhält die elektronische Getriebesteuerung 13 die Drehzahl der Turbinenwelle 18, also der Getriebeeingangsdrehzahl, und der Getriebeausgangswelle 19 sowie die Signale eines Wählhebel 22.

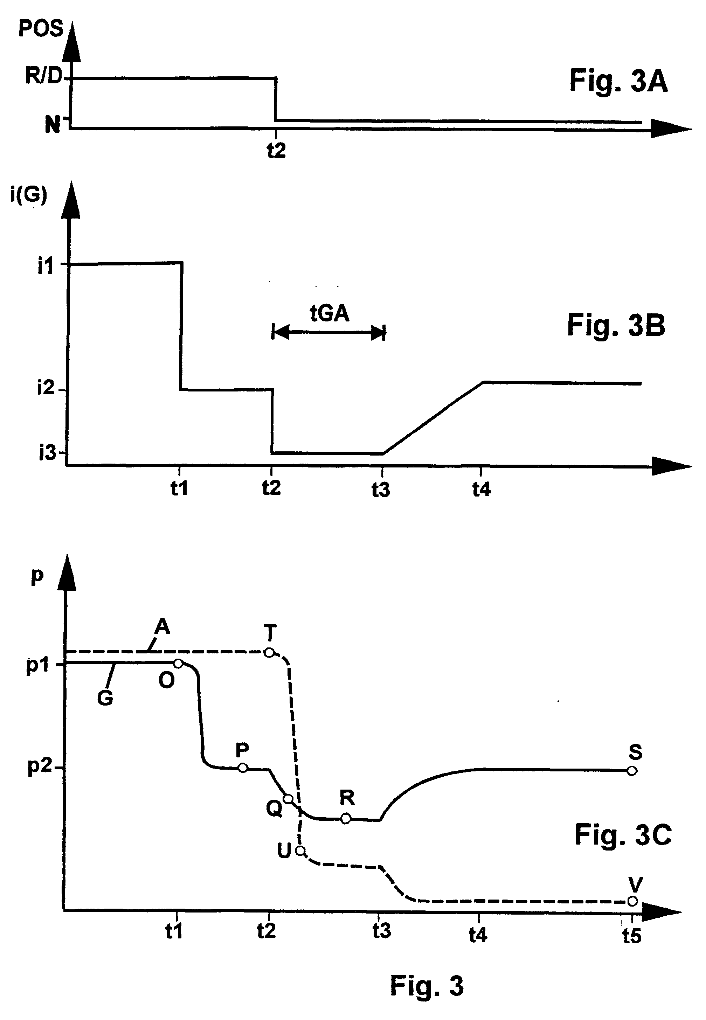

In Fig. 3 ist ein Zeitdiagramm für das erfindungsgemäße Verfahren dargestellt. Die Fig. 3 besteht aus den Teil-Fig. 3A bis 3C. Hierbei zeigen jeweils über der Zeit: Fig. 3A die Stellung des Wählhebels 22 (POS), Fig. 3B den von der elektronischen Getriebesteuerung 13 ausgegebenen Stromwert für den elektromagnetischen Druckregler i(G) und Fig. 3C den Druckverlauf der ersten Kupplung G und der zweiten Kupplung A. Der Druckverlauf der ersten Kupplung G ist hierbei als durchgezogene Linie ausgeführt. Der Druckverlauf der zweiten Kupplung A ist als gestrichelte Linie ausgeführt. Zu einem Zeitpunkt t1 wird eine Gangauslege-Bedingung erkannt. Die Gangauslege-Bedingung liegt dann vor, wenn:
- die Temperatur des Hydraulikfluids (Theta) größer einem Grenzwert GW ist (Theta > GW) und
- die Getriebeausgangsdrehzahl nAB kleiner einem Grenzwert GW ist (nAB < GW) und
- ein vom Fahrer vorgebbarer Leistungswunsch DKI kleiner einem Grenzwert GW ist (DKI < GW) und
- die Motordrehzahl nMOT kleiner einem Grenzwert GW ist (nMOT < GW).

Mit Erkennen der Gangauslege-Bedingung wird, wie in Fig. 3B dargestellt, der Stromwert der ersten Kupplung G von einem ersten Stromwert i1 auf einen zweiten Stromwert i2 verringert. Hierdurch ändert sich der Druckverlauf der ersten Kupplung G im Punkt O vom ersten Druckniveau p1 in Richtung des zweiten Druckniveaus p2. Während des Zeitraums t1 bis t2 erreicht die erste Kupplung G das zweite Druckniveau p2 im Punkt P. Das zweite Druckniveau ist hierbei so gewählt, daß die Kupplung noch geschlossen ist. Dieses zweite Druckniveau p2 stellt eine Funktion des von der Brennkraftmaschine abgegebenen Moments MM und dessen Drehzahl nMOT dar. Es gilt somit: p2(G) = f (MM, nMOT). Zum Zeitpunkt t2 wird von der elektronischen Getriebesteuerung 13 der Übergang des Wählhebels von Position D nach N bzw. R nach N erkannt. Die elektronische Getriebesteuerung 13 wird somit zum Zeitpunkt t2 den Stromwert der ersten Kupplung G vom zweiten Stromwert i2 auf den dritten Stromwert i3 führen. Zum anderen wird die elektronische Getriebesteuerung 13 den Abschaltbefehl für die zweite Kupplung A ausgeben. Als Reaktion hierauf verringert sich an der ersten Kupplung G das Druckniveau. Im Punkt Q öffnet sodann die erste Kupplung G. Für die zweite Kupplung A beginnt im Punkt T die Abschaltphase, wobei diese im Punkt U vollständig geöffnet ist. Ebenfalls zum Zeitpunkt t2 beginnt eine Zeitstufe, diese ist in Fig. 3B mit tGA bezeichnet. Diese Zeitstufe bestimmt den Zeitpunkt t3. Während dieser Zeitstufe ist der Druck der ersten Kupplung G so weit abgesenkt, daß die Kupplung unter Berücksichtigung aller Toleranzlagen sicher rutscht, aber nicht entleert. Das Druckniveau entspricht hierbei dem des Punktes R. Mit Ablauf der Zeitstufe tGA im Zeitpunkt t3 wird die zweite Kupplung A vollständig entleert, Druckniveau = 0 bar. Für die erste Kupplung G beginnt während des Zeitraumes t3 bis t4 eine Rampenfunktion, in Fig. 3B ändert sich hierdurch der Stromwert von i3 nach i2. Als Folge hiervon wird die erste Kupplung G wieder schließen. Während des Zeitraums t4 bis t5 verbleibt die erste Kupplung auf dem zweiten Druckniveau p2. Zum Zeitpunkt t5 ist das Verfahren beendet. Für die erste Kupplung im Endpunkt S bzw. zweiter Kupplung im Endpunkt V.

Das erfindungsgemäße Verfahren läßt sich insofern folgendermaßen zusammenfassen: Mit Erkennen der Gangauslege-Bedingung wird das Druckniveau in der ersten Kupplung G so weit abgesenkt, daß diese das von der Brennkraftmaschine abgegebene Moment noch, ohne zu rutschen, übertragen kann. Mit Gangauslegen und Erkennen der Position N wird das Druckniveau der ersten Kupplung so weit abgesenkt, daß das Lamellenpaket unter Berücksichtigung aller Toleranzlagen immer zu rutschen beginnt, entsprechend Punkt Q in Fig. 3C. Dieser Gradient, entsprechend der Druckdifferenz Punkt B zu Punkt Q, ist hierbei so gewählt, daß die erste Kupplung G das Getriebeeingangsmoment sanft abbaut, bevor die regulär abschaltende zweite Kupplung A, aus einem hohen Druckniveau kommend, entsprechend Punkt T in Fig. 3C, entleert wird. Das Verfahren läßt sich bei einem bestehenden Automatgetriebe durch einfache Software-Änderung realisieren. Veränderungen an der Hydraulik bzw. der Getriebe-Hardware sind somit nicht erforderlich.

### Bezugszeichen

- 1: Antriebseinheit
- 2: Antriebswelle
- 3: hydrodynamischer Wandler
- 4: Pumpenrad
- 5: Turbinenrad
- 6: Leitrad
- 7: Wandlerkupplung
- 8: Turbinenwelle
- 9: Ravigneaux-Satz
- 10: Freilauf FL1
- 11: Planetenradsatz
- 12: Getriebeausgangswelle
- 13: elektronische Getriebesteuerung
- 14: Micro-Controller
- 15: Speicher
- 16: Funktionsblock Steuerung Stellglieder
- 17: Funktionsblock Berechnung
- 18: Getriebeeingangsdrehzahl-Signal
- 19: Getriebeausgangsdrehzahl-Signal
- 20: Eingangsgrößen
- 21: hydraulisches Steuergerät
- 22: Wählhebel

- G: erste Kupplung
- A: zweite Kupplung
- D: dritte Kupplung
- B: vierte Kupplung
- C: fünfte Kupplung
- E: sechste Kupplung
- F: siebte Kupplung

## Patentansprüche

1. Verfahren zur Verminderung des Schaltruckes beim Gangauslegen eines von einer Brennkraftmaschine (1) angetriebenen Automatgetriebes mit einem von einem Fahrer bedienbaren Wählhebel (22), dieser wenigstens eine Vorwärts- (D) und Rückwärtsfahrposition (R) sowie eine Park- (P) und Neutralstellung (N) aufweist, wobei eine erste Kupplung (G) in den Position R, N und D (erster Gang) geschlossen ist, eine zweite Kupplung (A) mit Verlassen der Position D und Übergang nach N geöffnet wird bzw. eine dritte Kupplung (D) bei Verlassen der Position R und Übergang nach N geöffnet wird, **dadurch gekennzeichnet, daß** beim Erkennen einer Gangauslege-Bedingung das Druckniveau der ersten Kupplung (G) von einem ersten (p1(G)) auf ein zweites Druckniveau (p2(G)) verringert wird, wobei das zweite Druckniveau (p2(G)) oberhalb der Rutschgrenze liegt, so daß die erste Kupplung geschlossen bleibt.

2. Verfahren nach Anspruch 1, **dadurch gekennzeichnet, daß** das zweite Druckniveau (p2(G)) eine Funktion des von der Brennkraftmaschine abgegebenen Moments (MM) und dessen Drehzahl (nMOT) darstellt (p2(G) = f(MM, nMOT)).

3. Verfahren nach Anspruch 1, **dadurch gekennzeichnet, daß** mit Erkennen der Position N und sich öffnender zweiter bzw. dritter Kupplung die erste Kupplung (G) für eine vorgebbare Zeit (tGA) geöffnet wird und nach Ablauf der Zeitstufe (tGA = 0) das Druckniveau der ersten Kupplung (G) über eine Rampenfunktion auf das zweite Druckniveau (p2(G)) wieder erhöht wird, so daß diese wieder schließt.

4. Verfahren nach Anspruch 3, **dadurch gekennzeichnet, daß** die Gangauslege-Bedingung erkannt wird, wenn:
- die Temperatur des Hydraulikfluids (Theta) größer einem Grenzwert (GW) ist (Theta > GW) und
- eine Getriebeausgangsdrehzahl (nAB) kleiner einem Grenzwert (GW) ist (nAB < GW) und
- ein vom Fahrer vorgebbarer Leistungswunsch (DKI) kleiner einem Grenzwert (GW) ist (DKI < GW) und
- die Motordrehzahl (nMOT) kleiner einem Grenzwert (GW) ist (nMOT < GW).

## Claims

1. Method of reducing the jerk upon a shift into neutral of an automatic transmission, which is driven by an internal combustion engine (1) and has a driver-operable selector lever (22), which has at least a forward position (D), a reverse position (R) as well as a park position (P) and a neutral position (N), wherein a first clutch (G) is closed in the position R, N and D (first gear), a second clutch (A) is opened upon leaving position D and changing to N and/or a third clutch (D) is opened upon leaving the position R and changing to N, **characterized in that** upon detection of a shift-into-neutral condition the pressure level of the first clutch (G) is reduced from a first pressure level (p1(G)) to a second pressure level (p2(G)), wherein the second pressure level (p2(G)) lies above the slip limit so that the first clutch remains closed.

2. Method according to claim 1, **characterized in that** the second pressure level (p2(G)) is a function of the moment (MM) delivered by the i.c. engine and its rotational speed (nMOT) (p2(G) = f(MM, nMOT)).

3. Method according to claim 1, **characterized in that**, upon detection of the position N and an opening second and/or third clutch, the first clutch (G) is opened for a preselectable time (tGA) and at the end of the timing stage (tGA = 0) the pressure level of the first clutch (G) is increased by a ramp function back up to the second pressure level (p2(G)) so that said clutch closes again.

4. Method according to claim 3, **characterized in that** the shift-into-neutral condition is detected when:
- the temperature of the hydraulic fluid (theta) is higher than a limit value (GW) (theta > GW) and
- a transmission output speed (nAB) is lower than a limit value (GW) (nAB < GW) and
- a power requirement (DKI) preselectable by the driver is lower than a limit value (GW) (DKI < GW) and
- the engine speed (nMOT) is lower than a limit value (GW) (nMOT < GW).

## Revendications

1. Procédé pour réduire l'à-coup de changement de rapport lors du désengagement de vitesse d'une boîte de vitesses automatique entraînée par un moteur à combustion interne (1) et comprenant un levier de sélection (22) pouvant être manoeuvré par un conducteur, ce levier comportant au moins une position de marche avant (D) et une position de marche arrière (R), ainsi qu'une position de stationnement (P) et une position de point mort (N), dans lequel un premier embrayage (G) est fermé dans les positions R, N et D (première vitesse), un deuxième embrayage (A) s'ouvre lorsqu'on quitte la position D et qu'on passe vers N, ou un troisième embrayage (D) s'ouvre lorsqu'on quitte la position R et qu'on passe vers N, **caractérisé en ce que**, lors de la détection d'une condition de désengagement de vitesse, le niveau de pression du premier embrayage (G) est ramené du premier niveau de pression (p1 (G)) à un deuxième niveau de pression (p2 (G)), le deuxième niveau de pression (p2 (G)) se trouvant au-dessus de la limite de patinage, de sorte que le premier embrayage reste fermé.

2. Procédé selon la revendication 1, **caractérisé en ce que** le deuxième niveau de pression (p2 (G)) représente une fonction du couple (MM) délivré par le moteur à combustion interne et de sa vitesse de rotation (nMOT) : (p2 (G) = f (MM, nMOT)).

3. Procédé selon la revendication 1, **caractérisé en ce qu'**avec la détection de la position N et de l'ouverture du deuxième ou du troisième embrayage, le premier embrayage (G) s'ouvre pour un temps pouvant être prédéterminé (tGA) et qu'après l'écoulement du laps de temps (tGA = 0), le niveau de pression du premier embrayage (G) est de nouveau élevé au deuxième niveau de pression (p2 (G)) en suivant une fonction rampe, de sorte que cet embrayage se ferme de nouveau.

4. Procédé selon la revendication 3, **caractérisé en ce que** la condition de désengagement de vitesse est détectée lorsque :
- la température du fluide hydraulique (Thêta) est supérieure à une valeur limite (GW) : (Thêta >GW) et
- une vitesse de rotation de sortie de la boîte de vitesses (nAB) est inférieure à une valeur limite (GW) : (nAB<GW) et
- un souhait de puissance (DKI) pouvant être prédéterminé par le conducteur est inférieur à une valeur limite (GW) : (DKI < GW) et
- la vitesse de rotation du moteur (nMOT) est inférieure à une valeur limite (GW) : (nMOT<GW).
